Europäisches Patentamt

European Patent Office

Office européen des brevets

(11) Publication number: **0 281 221**
A2

# (12) EUROPEAN PATENT APPLICATION

(21) Application number: 88300362.6

(22) Date of filing: 18.01.88

(51) Int. Cl.⁴: **G01N 21/72** , G01N 21/31

Le titre de l'invention a été modifié (Directives relatives à l'examen pratiqué à l'OEB, A-III, 7.3)

(30) Priority: 03.02.87 GB 8702366

(43) Date of publication of application:
07.09.88 Bulletin 88/36

(84) Designated Contracting States:
AT BE CH DE ES FR GB GR IT LI LU NL SE

(71) Applicant: **Analink Developments Limited**
**Unit D Cardiff Work Shops British Steel**
**Corporation Lewis Road**
**East Moors Cardiff(GB)**

(72) Inventor: **Brown, Leslie Ventonleague House**
**15 Wern Fawr Road§Wern Tarw§Pencoed**
**Nr Bridgend Mid Glamorgan South**
**Wales(GB)**

(74) Representative: **Enskat, Michael Antony Frank**
**et al**
**Saunders & Dolleymore 9, Rickmansworth**
**Road**
**Watford Hertfordshire WD1 7HE(GB)**

(54) Atomic absorption analysis apparatus.

(57) The apparatus is supplied with gas samples from a gas chromatograph (2) and liquid samples from a liquid chromatograph (6). When supplied with liquid, the liquid is vaporised in a vaporiser (16). The gas or vaporised liquid samples are mixed with hydrogen at a burner (10) and ignited. The thus reduced gases are fed to a furnace 36 where a continuous spectographic analysis of the combustion products can be carried out.

EP 0 281 221 A2

## ANALYSIS APPARATUS

The present invention relates to analysis apparatus for analysing samples.

When conducting gas or liquid chromatographic analysis, the components to be analysed are physically separated in space in a gas or a liquid stream. Similarly in flow injection or elemental analysis the samples to be analysed are separated in time by portions of neat liquid. This is effected by sequential injection of the samples into the flowstream of the liquid.

Each component is taken individually, and its matrix interferences are destroyed. The component is then atomised by heating to a high temperature before being analysed in a spectrometer usually by detecting the wavelengths of light which the element in the sample to be analysed absorbs.

This process must be carried out on an individual basis for each component produced and so is a time-consuming exercise. In addition different process steps are required for liquids and gases.

It is an object of the invention to provide an improved analysis apparatus.

According to the present invention there is provided analysis apparatus comprising a chamber housing a burner supplied with a mixture of fluids to be analysed and hydrogen, a furnace for receiving the products of combustion from the burner, a photo source directed at a photo sensor and positioned in relation to the furnace to have the light path between the source and the sensor interrupted by the heated products of combustion, an igniter and flame sensor located at the burner, and a control system for causing the igniter to attempt ignition repeatedly at the burner when the absence of a flame is detected by the flame sensor.

Chromatographic analysis apparatus embodying the invention will now be described, by way of example, with reference to the accompanying diagrammatic drawing which shows a block diagram of the apparatus.

A gas chromatograph 2 produces a continuous flow of gas in which various components have become spacially separated in the stream. This continuous flow of gas is fed to the apparatus via an inlet valve 4 where the successive components are combusted in a hydrogen flame.

A high pressure liquid chromatograph 6 produces a continuous flow of liquid in which the various components have become spacially separated in the stream. This continuous flow of liquid is fed to the apparatus via an inlet valve 8 where the successive components are reduced (by combustion with hydrogen).

In a flow injection or elemental analyser a flow of liquid is produced in which samples are injected as discrete entities either manually or automatically. In the case as before the continuous flow of liquid is fed to the apparatus via an inlet valve 8 where the successive components are reduced.

Thus, it will be seen that the apparatus can be selectively connected to one or other of the sources 2, 6 by operating the appropriate inlet valve 4, 8.

The apparatus itself comprises a burner 10 having three inlet jets 10A, 10B and 10C. The jet 10A is connected by a gas conduit 24, incorporating a flow control valve 12, to a source 14 of hydrogen. The jet 10C is connected via a resistance heated transfer line 18 to the inlet valve 4. The jet 10B is coupled to the ouput of a vaporiser 16.

The vaporiser 16 has its input coupled to the inlet valve 8 by a high pressure transfer line 20.

A bleed line 22 coupled into the gas conduit 24 feeds hydrogen via a flow restrictor 26 and a valve 48 into the high pressure transfer line 20 so that a mixture of hydrogen and liquid are delivered to the vaporiser to aid vaporisation of the liquid.

An igniter and flame sensor 30 is located in the vicinity of the three jets. A microprocessor control system 32 is electrically coupled to the control valve 12, the valve 48, the heated transfer line 18 and the igniter and flame sensor 30 to control the operation of the apparatus.

The jets 10A, 10B and 10C are located in a chamber defined by an inverter graphite or ceramic funnel 34. A tubular high temperature furnace 36 (of graphite or ceramic for example) having a central T-junction is located above the inverted funnel 34 and the upper end of the inverted funnel engages the T-junction. Terminals connected at opposite ends of the furnace 36 are coupled to the microprocessor control system 32 and when supplied with current will effect resistive heating of the furnace to a temperature of up to 2000 °C.

The furnace 36 forms a viewing tube for establishing the identity of the gases therein. An atomic absorption spectrometer photo source 40 is located at one axial end of the furnace 36 while an atomic absorption spectrometer photo detector 42 is located at the opposite axial end of the furnace in direct line of sight with the photo source 40.

In operation if gases from the gas chromatograph 2 are to be analysed the microprocessor 32 is programmed to initially energise the resistive heating of the furnace to bring the temperature up to a required level e.g. 2000 °C. A temperature sensor (not shown) may be provided to provide feedback data to indicate when the furnace has reached the desired temperature and thereafter to maintain the temperature level substantially constant. At the same time the resistive heating of the transfer line 18 is actuated (via spaced terminals connected along the length of the line 18). Optionally a temperature sensor (not shown) and feedback system may be used to maintain the temperature of the line at the required level. When the microprocessor senses that the furnace has reached the required temperature, the solenoid valve 12 is energised and hydrogen is supplied from the source 14 to the jet 10A. At the same time the igniter and flame sensor 30 is energised and periodic ignition sparks are supplied to the jet for as long as it is sensed that no flame is present. At this point, the valve 4 if not already open is opened and gas to be analysed is warmed by the line 18 and supplied to the jet 10C. This gas combines with hydrogen from the jet 10A to form a combustible mixture which will then burn when ignited. The burned or reduced gases rise up the inverted funnel 34 to enter the furnace 36 where they become heated. The light from the source 40 which is beamed along the tube to the sensor 42 will have certain wavelengths absorbed by the gases and these absorbed wavelengths are sensed by the sensor 42 which is coupled to a trace recorder (not shown) to produce a permanent record of the analysis.

If, instead of analysing the gas from a gas chromatograph, it is required to analyse the liquid from a liquid chromatograph or a flow injection or elemental analyser the microprocessor is programmed to open the valve 48 for the hydrogen bleed line and to de-energise the resistively heated transfer line.

At this point when the furnace has reached its operating temperature and the control system has opened the valve 12, the valve 8 is opened to admit liquid to the line 20. The liquid when passing the junction with the hydrogen bleed line 22 draws in hydrogen and the mixture of liquid and hydrogen are atomised or vaporised in the vaporiser 16 before being ejected through the jet 10B. The process then continues as described in conjunction with the gas from the gas chromatograph.

It will be appreciated that the apparatus enables a continuous analysis to be performed and can be directly coupled to both a gas chromatograph and a liquid chromatograph a flow injection analyser or an elemental analyser.

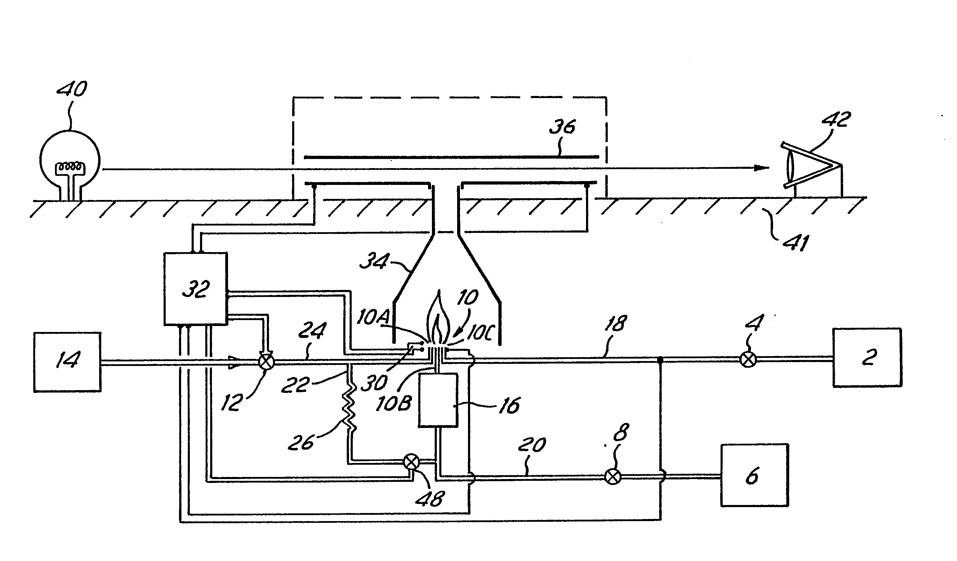

## Claims

1. Analysis apparatus comprising a chamber housing a burner supplied with a mixture of fluids to be analysed and hydrogen, a furnace for receiving the products of combustion from the burner, a photo source directed at a photo sensor and positioned in relation to the furnace to have the light path between the source and the sensor interrupted by the heated products of combustion, an igniter and flame sensor located at the burner, and a control system for causing the igniter to attempt ignition repeatedly at the burner when the absence of a flame is detected by the flame sensor.

2. Apparatus according to Claim 1 wherein the burner comprises a first jet coupled to a source of hydrogen and a second jet coupled to a gas chromatograph inlet.

3. Apparatus according to Claim 1 wherein the burner comprises a first jet coupled to a source of hydrogen and a further jet coupled to a vaporiser supplied with a mixture of liquid from a liquid source and hydrogen.

4. Apparatus according to Claim 1 wherein the burner comprises a first jet coupled to a source of hydrogen, a second jet coupled to a gas chromatograph inlet, and a third jet coupled to a vaporiser supplied with a mixture of liquid from a liquid source and hydrogen.

5. Apparatus according to Claim 3 or to Claim 4 wherein the inlet of the vaporiser is connected to a liquid source inlet by a high pressure transfer line and hydrogen fed from the hydrogen source and through a restrictor is injected into the high pressure transfer line.

6. Apparatus according Claim 2 or to Claim 4 wherein the second jet is coupled to the gas chromatograph inlet by a resistively heated transfer line.

7. Apparatus according to any preceding claim wherein the chamber is defined by an inverted funnel, and the furnace is defined by a heatable tube having an intermediate T-junction coupled to the upper end of the inverted funnel.

8. Apparatus according to Claim 7 wherein the heatable tube is a graphite tube and is resistively heated.

9. Apparatus according to any preceding claim including a control valve controlling the supply of hydrogen and wherein the control system controls the control valve.